# EUROPEAN PATENT SPECIFICATION

(11) **EP 4 379 206 B1**
(45) Date of publication and mention of the grant of the patent: **29.04.2026**
(21) Application number: 22210561.1
(22) Date of filing: 30.11.2022
(51) Int. Cl.: F03D 1/06, F03D 80/30, B29C 70/88, B32B 15/14

(54) **IMPROVED ELECTRICAL CONDUCTIVITY OF WIND TURBINE BLADE PARTS**
VERBESSERTE ELEKTRISCHE LEITFÄHIGKEIT VON WINDTURBINENSCHAUFELTEILEN
CONDUCTIVITÉ ÉLECTRIQUE AMÉLIORÉE DE PARTIES DE PALE D'ÉOLIENNE

(43) Date of publication of application: 05.06.2024
(73) Proprietor: LM Wind Power A/S, 6000 Kolding (DK)
(72) Inventor: JESPERSEN, Klavs, 6000 Kolding (DK); NIELSEN, Lars, 6000 Kolding (DK)
(74) Representative: COPA Copenhagen Patents

(56) References cited:
- EP-B1- 3 730 778
- WO-A1-2017/108691
- WO-A1-2021/219204
- WO-A1-2022/057990

## Description

### FIELD OF THE INVENTION

The present disclosure relates to wind turbine blades and electrical conductivity in wind turbine blade parts. More specifically, the present disclosure pertains to lightning protection and equipotentialization of wind turbine blade parts, such as reinforcement parts of blade shells, such as blade shell parts, shear webs, spar beams, spar caps etc.

### BACKGROUND OF THE INVENTION

Wind turbine blades of fibre-reinforced polymer and in particular the aerodynamic shells of wind turbine blades are usually manufactured in moulds, where the pressure side and the suction side of the blade are manufactured separately by arranging glass fibre mats and/or other fibre-reinforcement material, such as carbon fibre, in each of the two moulds. Afterwards, one of the two halves is turned upside down and positioned on top of the other of the two halves, and the two halves are adhered together. The blade parts may be positioned on top of each other by turning and repositioning the complete half mould.

A wind turbine blade and/or components of the wind turbine blade, such as webs and/or shells, may be manufactured by infusing fibres, such as glass fibre mats and/or carbon fibre mats, with a resin, such as polyester or epoxy. Infusion of the fibres may be provided by vacuum assisted resin transfer moulding (VARTM).

As wind turbines and wind turbine blades increase in size, the risk of lightning striking the wind turbine increases. It is therefore of increasing interest to provide wind turbines and in particular wind turbine blades with lightning protection measures.

As the demand for blades for wind turbines tends towards blades of increasing lengths, a need concurrently arises for manufacture of blades having increased rigidity and a comparatively lower weight. One way of achieving these properties is to combine various types of fibres in the laminate of the blades, for instance is it an option to combine glass fibres and carbon fibres, and likewise, carbon fibres or glass fibres may advantageously be combined with steel fibres. Combinations with other types of fibres are thus also possible, and it is also an option to exclusively employ carbon fibres or other suitable fibre types. A combination of e.g. glass fibres with carbon fibres in a so-called hybrid laminate may possess a problem in that some of the fibre types are electrically conductive, e.g. carbon fibres and steel fibres. A lightning strike directly into the laminate may cause damage to a blade comprising electrically conductive fibres, as they would conduct the current and thereby be greatly heated. This is particularly problematic in case of fibres having comparatively poor conductivity, such as carbon fibres, and in case of hybrid laminates with fibres in e.g. mat-shape, where the individual mat may e.g. have a small portion of electrically conductive fibres and a larger portion of e.g. glass fibres that are not electrically conductive.

Further, a wind turbine may accumulate static electrical potential during operation. This static electrical potential may cause flashovers inside the blade causing damages to the wind turbine blades or disturb electronics if it is not equalized.

Examples of relevant background-art wind turbine blade parts are shown in WO 2017/108691 A1 and WO 2021/219204 A1.

### SUMMARY OF THE INVENTION

It is an object of the present invention to provide a wind turbine blade part for a wind turbine blade which overcomes at least some of the disadvantages of the prior art.

Thus, the present invention relates to a wind turbine blade part for a wind turbine blade. The wind turbine blade part comprises:
- a metal mesh layer comprising a plurality of apertures,
- at least a first fibre-reinforced layer comprising a plurality of first electrically conductive fibres, and
- a plurality of second electrically conductive fibres,
wherein at least a number of the plurality of second electrically conductive fibres extend transversely through the plurality of apertures of the metal mesh layer so as to electrically connect the at least first fibre-reinforced layer with the metal mesh layer.

The wind turbine blade part may form at least a part of the main laminate or spar cap of a wind turbine blade.

By providing a transverse connection between the at least first fibre-reinforced layer and the metal mesh layer, mechanical stability to the wind turbine blade part is increased and thereby, delamination of the wind turbine part is reduced. Further, the electrically conductive connection between the first fibre-reinforced layer and the metal mesh layer is increased and thereby, equalization of the electrical potential (or equipotentialization) between the at least first fibre-reinforced layer and the metal mesh layer is better facilitated. Equalization of the electrical potential via a metal mesh layer protects the main laminate from damages that may occur with high electrical currents, such as from lightning strikes.

Also disclosed is a method of manufacturing a wind turbine blade part for a wind turbine blade. The method comprises:
- providing at least a first fibre-reinforced layer comprising a plurality of first electrically conductive fibres,
- providing a metal mesh layer comprising a plurality of apertures,
- providing a plurality of second electrically conductive fibres, such that at least a number of the second electrically conductive fibres extend transversely through the plurality of apertures of the metal mesh layer so as to electrically connect the at least first fibre-reinforced layer with the metal mesh layer,
- providing resin to infuse the at least first fibre-reinforced layer, the metal mesh layer, and the plurality of second electrically conductive fibres, and
- curing the resin to form the wind turbine blade part.

The at least first fibre-reinforced layer, the metal mesh layer, and the plurality of second electrically conductive fibres may be arranged in a mould cavity, e.g. formed by a rigid mould part and a vacuum bag, and wherein the resin is supplied into the mould cavity.

The plurality of second electrically conductive fibres may be provided as stitches, via a chopped strand mat, as punched fibres or via other forms that provide a mechanical and electrical connection between the at least first fibre-reinforced layer and the metal mesh layer. Alternatively, the least first fibre-reinforced layer may comprise a plurality of second electrically out-of-plane conductive fibres.

For example, the plurality of second electrically conductive fibres may be provided as stitches connecting the at least first fibre-reinforced layer and the metal mesh layer. Providing the plurality of second electrically conductive fibres may comprise providing the plurality of second electrically conductive fibres as stitches combining the metal mesh layer and the at least first fibre-reinforced layer. The type of stitches may be running stitches, cross stitches, diamond stitches or other stitches suitable for connecting two layers. The plurality of second electrically conductive fibres may be provided as an electrically conductive thread. A plurality of stitches may be provided by one thread.

The metal mesh layer may be defined by a first, second, third and a fourth edge. Preferably, the stitches are provided substantially along at least some of the edges of the metal mesh layer. The edges of the metal mesh layer are most prone to delamination. Thus, by providing stitches along at least some of the edges of the metal mesh layer, mechanical stability is increased.

The use of stitches to electrically connect the mesh with the at least first fibre-reinforced layer provides a simple solution for electrically connecting said parts.

The plurality of second electrically conductive fibres may be provided as punched fibres, e.g., needle-punched fibres. Providing the plurality of second electrically conductive fibres may comprise providing the plurality of second electrically conductive fibres as punched fibres, e.g., needle-punched fibres combining the metal mesh layer and the at least first fibre-reinforced layer. The punched fibres may be punched through the metal mesh layer and connect to the at least first fibre-reinforced layer so as to electrically connect the two layers. The punched fibres may be provided into the at least first fibre-reinforced layer or provided such that it contacts the at least first fibre-reinforced layer.

The plurality of second electrically conductive fibres may be provided via a first chopped strand mat. The first chopped strand mat may be provided between the at least first fibre-reinforced layer and the metal mesh layer. Providing the plurality of second electrically conductive fibres may comprise providing the plurality of second electrically conductive fibres via a chopped strand mat. The method may comprise arranging the chopped strand mat between the at least first fibre-reinforced layer and the metal mesh layer. The number of second electrically conductive fibres that extend transversely through the plurality of apertures may be provided by applying a vacuum to the mould cavity.

The plurality of second electrically conductive fibres may extend out of the plane of the chopped strand mat. The plurality of second electrically conductive fibres of first chopped strand mat thus provides a connection between the at least first fibre-reinforced layer and the metal mesh layer when the first chopped strand mat is provided therebetween. The chopped strand mat may be a hybrid chopped strand mat comprising glass fibres and carbon.

The use of a chopped strand mat provides a simple method of laying up the material that forms the at least first fibre-reinforced layer, the chopped strand mat and the metal mesh layer, and where at least some of the chopped fibres of the chopped strand mat will provide transverse fibres that both act as potential-equalising connections and add transverse mechanical strength.

The plurality of second electrically conductive fibres may be provided as chopped fibres when provided via a chopped strand mat. The average length of the plurality of second electrically conductive fibres, when provided via a chopped strand mat, may be between 1-100 mm, such as 1-70 mm, such as 5-50 mm.

The first chopped strand mat may have a length between 1-120 m, such as between 10-110 m, such as between 30-100 m. The first chopped strand mat may have width between 1-30 m, such as between 1-25 m, such as between 5-15 m. The first chopped strand mat may have a thickness between 0.01-20.0 mmm, such as 0.05-10.0 mm, such as 0.1-5.0 mm. The first chopped strand mat may extend along the entire width of the wind turbine blade and/or entire length of the wind turbine blade.

The plurality of second electrically conductive fibres may be provided via a plurality of adjoining chopped strand mats, including the first chopped strand mat. The plurality of adjoining chopped strand mats is provided between the first fibre-reinforced layer and the metal mesh layer.

The thickness of each of the plurality of second electrically conductive fibres may be between 1-20 µm, such as 3-12 µm, such as 5-10 µm. The thickness of each of the second electrically conductive fibres may correspond to the diameter of each of the fibres.

Each of the plurality of second electrically conductive fibres may comprise metal, such as copper, or carbon. Each of the plurality of second electrically conductive fibres may comprise carbon fibres, preferably carbon fibre tows.

The metal mesh layer may comprise a conductive material, such as a metal or an alloy, such as copper, aluminium, silver, or gold, or a combination thereof. In a preferred embodiment, the metal mesh comprises copper or aluminium. The metal mesh layer may be electrically connected to a down-conductor or a lightning receptor of a wind turbine blade.

Each of the apertures of the metal mesh layer is between 0.01-20.0 mm, such as 0.1-10.0 mm, such as 0.2-2.0 mm. The apertures of the metal mesh layer may be configured to receive at least one second electrically conductive fibre but preferably a plurality of second electrically conductive fibres.

The metal mesh layer may have a length between 1-120 m, such as between 10-110 m, such as between 30-100 m. The metal mesh layer may have a thickness between 0.1-5.0 mm, such as between 0.2-3.0 mm, such as between 0.5-1.0 mm. The metal mesh layer may have a width between 1-30 m, such as between 1-25 m, such as between 5-15 m. The metal mesh layer may extend along the entire width of the wind turbine blade and/or entire length of the wind turbine blade, in which case the metal mesh layer may act as part of the down-conducting system. The length of the metal mesh layer may correspond to the length of the wind turbine blade and the chordwise width of the wind turbine blade. However, the metal mesh layer may also have a width corresponding to the width of the spar cap.

However, in another preferred embodiment, the metal mesh layer is only formed along parts of the wind turbine blade and acts as a potential-equalising part that is electrically connected to a down-conducting system, such as a down-conductor cable. In such a system, the metal mesh (or metal mesh layer) may locally extend along for instance 5-200 cm of the wind turbine blade length, preferably 10-150 cm, and more preferably 15-100 cm. The metal mesh (or metal mesh layer) may for instance extend across the entire spar cap in the chordwise direction of the blade, or at least along a majority of the spar cap width.

The at least first fibre-reinforced layer may comprise unidirectional fibres. Unidirectional fibres provides mechanical stability and stiffness to the blade. The at least first fibre-reinforced layer may comprise biaxial fibres and/or triaxial fibres. Biaxial or trial fibre layers have a surface which is easier to connect to as to compared to layers with unidirectional fibres and further provides mechanical strength in a plurality of directions. The at least first fibre-reinforced layer may comprise pultruded elements. The first fibre-reinforced layer and/or second fibre-reinforced layer may comprise carbon fibres, preferably carbon fibre tows.

The wind turbine blade part may comprise a plurality of fibre-reinforced layers, including the at least first fibre-reinforced layer and a second fibre-reinforced layer. The at least first fibre-reinforced layer may comprise biaxial fibres, and the second fibre-reinforced layer may comprise unidirectional fibres. The at least first fibre-reinforced layer may be arranged between the metal mesh layer and the second fibre-reinforced layer. Alternatively, and preferably, the at least first fibre-reinforced layer may be arranged between the first chopped strand mat and the second fibre-reinforced layer. The at least first fibre-reinforced layer comprising biaxial fibres and the first chopped strand mat may be sewn together, e.g., stitched together.

The wind turbine blade part may comprise a fibre-reinforced polymer layer comprising polymer fibres. The fibre-reinforced polymer layer may be arranged adjacent to the metal mesh layer with respect to the plurality of fibre-reinforced layers, e.g., the first fibre-reinforced layer and/or the second fibre-reinforced layer.

A plurality of third electrically conductive fibres may be provided via a second chopped strand mat. The second chopped strand mat may be arranged such that the metal mesh layer is arranged between the first chopped strand mat and the second chopped strand mat. The second chopped strand mat may provide a further increased mechanical and electrical connection between the metal mesh layer and the at least first fibre-reinforced layer and may further provide a better potential-equalising connection to the mesh layer.

The wind turbine blade part may comprise a plurality of metal mesh layers, such as a first metal mesh layer and a second metal mesh layer. The plurality of fibre-reinforced layers may be arranged between the first metal mesh layer and the second metal mesh layer.

The number of second electrically conductive fibres extending transversely per cm² may be more than 1, such as between 1-1000, such as between 5-500. The number of second electrically conductive fibres extending transversely and through an aperture of the metal mesh layer may be more than 1, such as between 1-100, such as between 5-50. The diameter of each of the plurality of second electrically conductive fibres may be smaller than the aperture of the metal mesh layer.

### BRIEF DESCRIPTION OF THE FIGURES

Embodiments of the invention will be described in more detail in the following with regard to the accompanying figures. The figures show one way of implementing the present invention and are not to be construed as being limiting to other possible embodiments falling within the scope of the attached claim set.
Fig. 1 is a schematic diagram illustrating an exemplary wind turbine,
Fig. 2 is a schematic diagram illustrating an exemplary wind turbine blade,
Fig. 3 is a perspective view of a part of the wind turbine blade,
Fig. 4 is a cross-sectional view of an exemplary wind turbine blade,
Figs. 5a-5c are schematic diagrams illustrating a cross section of an exemplary wind turbine blade part,
Fig. 5d is a perspective view of a part of the wind turbine blade,
Fig. 6 is a schematic diagram illustrating an exemplary wind turbine blade part, and
Fig. 7 is schematic diagram illustrating an exemplary method for manufacturing a wind turbine blade part.

### DETAILED DESCRIPTION OF THE INVENTION

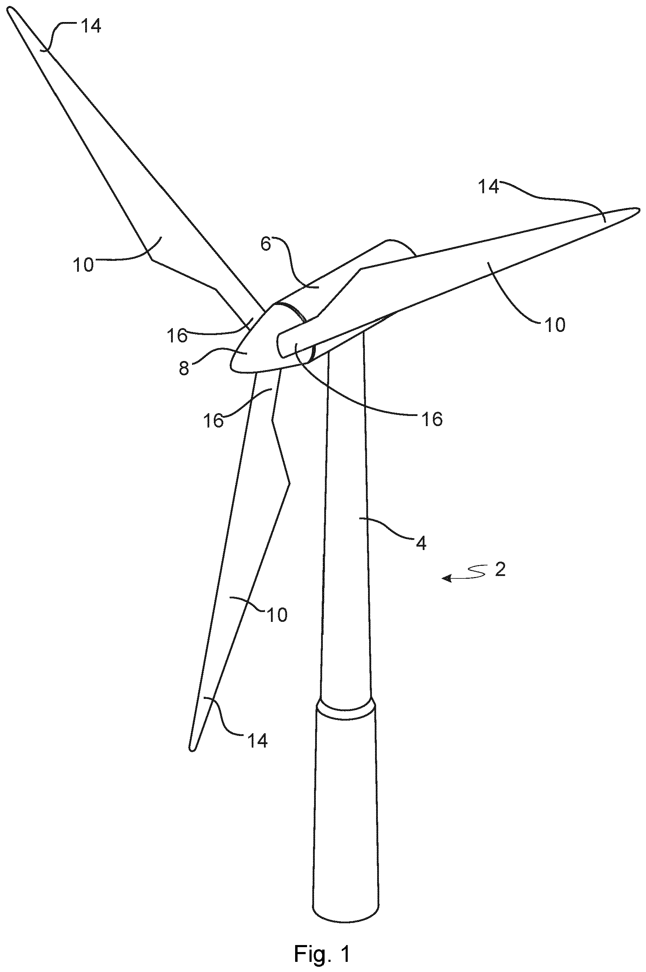

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 farthest from the hub 8.

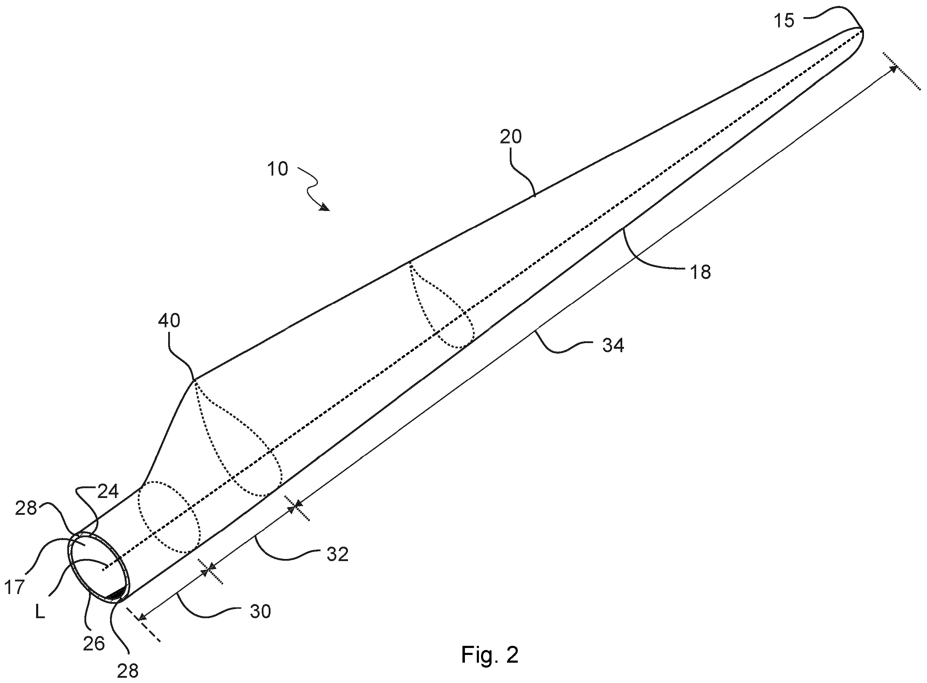

Fig. 2 shows a schematic view of a wind turbine blade 10. The wind turbine blade 10 has the shape of a conventional wind turbine blade and comprises a root region 30 closest to the hub, a profiled or an airfoil region 34 farthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross section, which for instance makes it easier and safer to mount the blade 10 to the hub. The diameter (or the chord) of the root region 30 may be constant along the entire root region 30. The transition region 32 has a transitional profile gradually changing from the circular or elliptical shape of the root region 30 to the airfoil profile of the airfoil region 34. The chord length of the transition region 32 typically increases with increasing distance from the hub. The airfoil region 34 has an airfoil profile with a chord extending between the leading edge 18 and the trailing edge 20 of the blade 10. The width of the chord decreases with increasing distance from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e., pre-bent), thus providing the chord plane with a correspondingly twisted and/or curved course, this being most often the case in order to compensate for the local velocity of the blade being dependent on the radius from the hub.

The wind turbine blade 10 comprises a blade shell comprising two blade shell parts or half shells, a first blade shell part 24 and a second blade shell part 26, typically made of fibre-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 have a semi-circular or semi-oval outer cross-sectional shape.

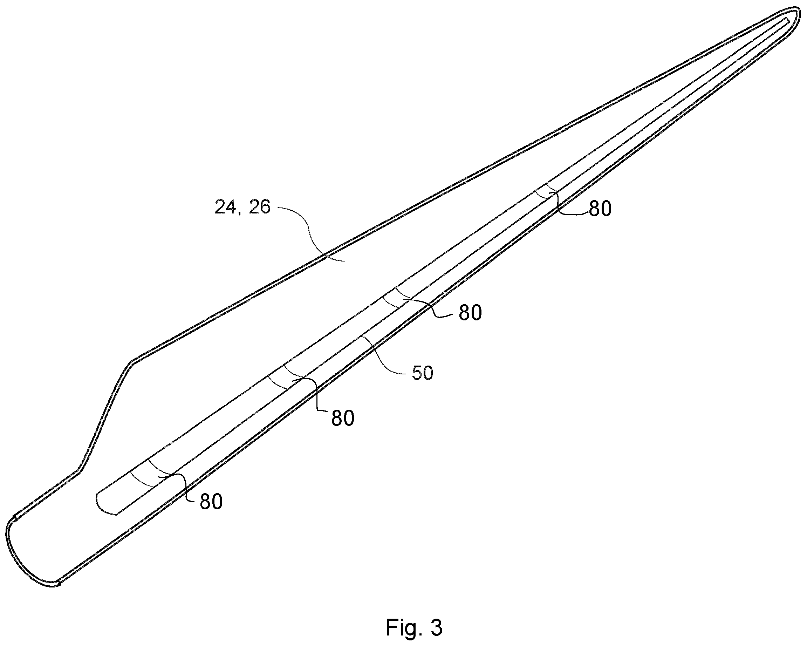

Fig. 3 shows a perspective view of a blade shell part 24, 26 comprising a load-carrying or reinforcing structure 50, which forms a spar cap or main laminate of the blade shell part. The blade shell part comprises metal mesh layers 80, which are arranged on the load-carrying structure 50 and distributed along the length of the blade shell. The metal mesh layers 80 may for instance be spaced substantially equidistantly. The metal mesh layers 80 are to be electrically connected to the lightning protection system of the blade, for instance a down-conductor (not shown). The spar cap can be integrated into the blade shell part or it can be a separate spar cap that is attached, e.g., by adhesion, to the blade shell parts 24, 26. The spar cap may be part of a separate spar structure. However, it is also possible to provide a blade with spar caps provided at both the pressure side shell part 26 and the suction side shell part 24, with one or more shear webs 42 attached between the spar caps. The shear webs 42 could alternatively be a spar box with spar sides, such as a trailing edge spar side and a leading edge spar side. The spar caps may comprise carbon fibres while the rest of the shell parts 24, 26 may comprise glass fibres.

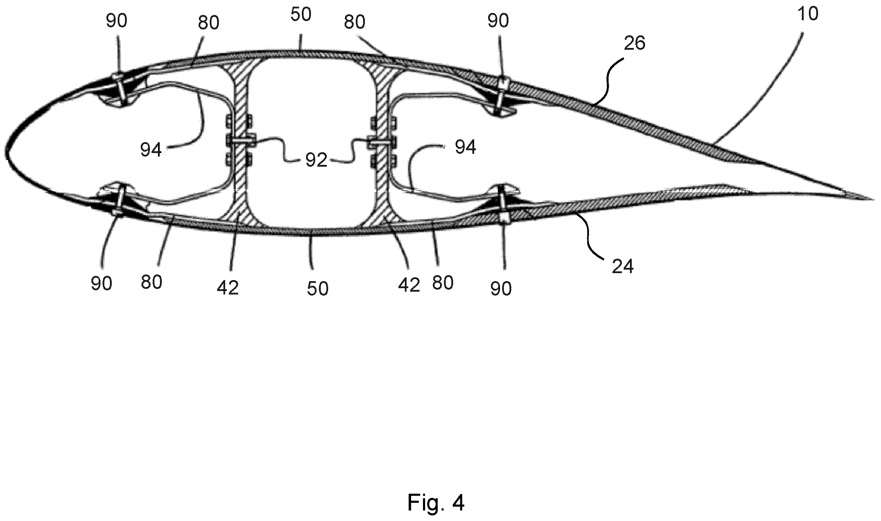

Fig. 4 shows a cross-sectional view of an exemplary wind turbine blade 10 according to this disclosure. It is noted that the design shown in Fig. 4 comprises a plurality of lightning receptors. However, it is recognised that the invention is also applicable and advantageous for an embodiment having only a single lightning receptor, e.g., arranged near the tip of the blade, and being connected to a down-conductor in form of a cable, the cable being an insulated or non-insulated cable.

The wind turbine blade comprises a blade shell comprising blade shell parts 24, 26. The blade shell parts 24, 26 comprise in the shown embodiment an integrated load-carrying structure 50 and a lightning protection system. The inner part of the blade 10 comprises two substantially longitudinally extending shear webs 42. The lightning protection system comprises a number of lightning receptors 90 provided at the exterior surface of the blade shells 24, 26. The lightning protection system comprises lightning down-conductors 92 which are each electrically connected to a lightning receptor 90 via connection 94. In another embodiment (not shown) comprising a lightning protection system with only a single lightning receptor, the lightning down-conductor may be directly connected to the lightning receptor.

The lightning down-conductors 92 are further configured to be electrically connected to a ground connection. The lightning receptors 90 and connections 94 are for example metallic elements configured to conduct a lightning current that may be extremely high or powerful. The lightning current must be conducted reliably from the lightning down-conductors 92 to a ground connection (not shown), including optionally across a spark gap. The lightning receptors 90 may be connected to connections 94 by terminals that are configured for reliably transferring a lightning current from the receptor 90 to the connection 94. In the blade 10, the load-carrying structure 50 comprises electrically conductive fibres, such as carbon fibres. The blade 10 comprises a potential equalization system comprising electrically conductive metal mesh layers 80 configured to provide a potential equalising connection between the electrically conductive fibres of the load-carrying structure 50 and the lightning protection system. The metal mesh layers 80 are each connected to a corresponding portion of the electrically conductive fibres in the load-carrying structure 80 and connected to the down-conductors 92 via the lightning receptors 90 or alternatively or additionally directly to the down-conductor 92 via a separate conductor. The metal mesh is shown as a layer in Fig. 4.

As mentioned, the embodiment shown in Fig. 4 comprises a plurality of lightning receptors. In another embodiment having only a single or a few lightning receptors, the lightning down-conductor may be arranged internally in the blade, e.g., on one of the shear webs. The metal mesh layer may then be arranged on the load-carrying structure, which is potential-equalised via a conductor to the lightning down-conductor.

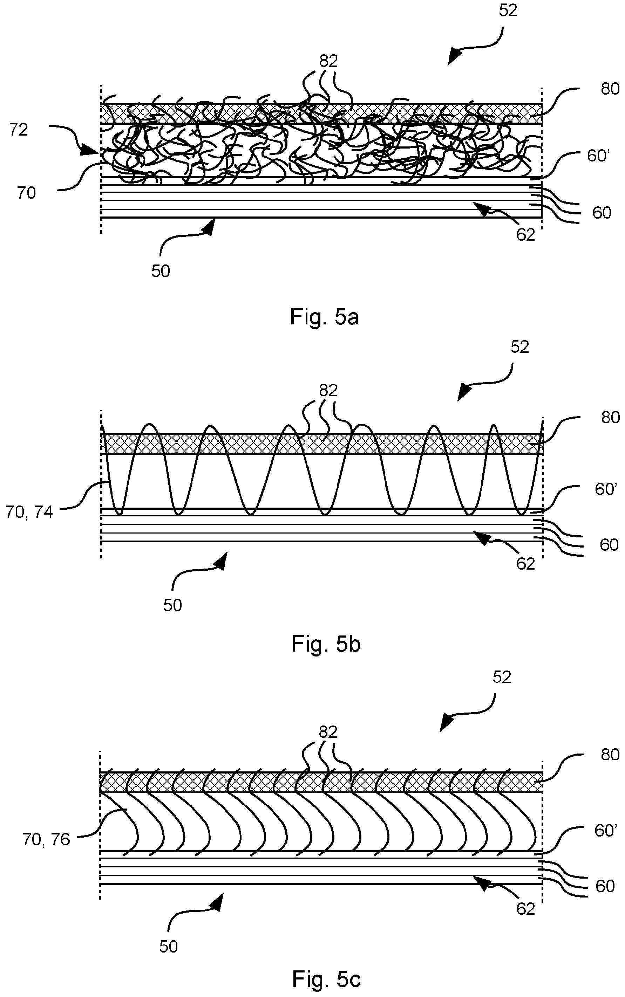

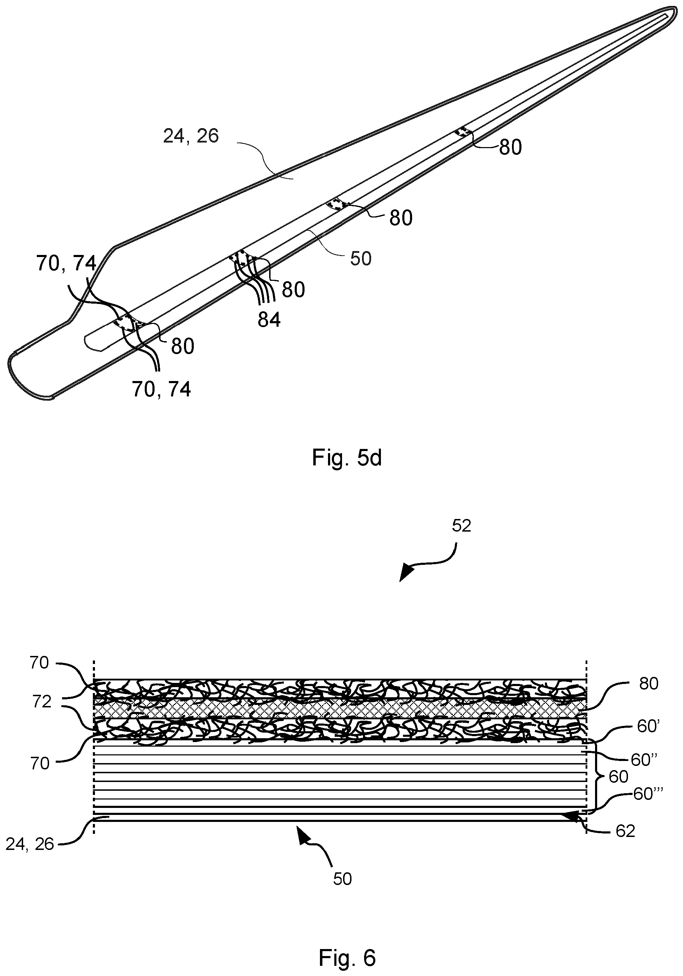

Fig. 5a-5c are schematic diagrams illustrating cross sections of different embodiments of a wind turbine blade part, such as at least a part of a main laminate or a spar cap of a wind turbine blade, as seen in a cross-sectional view or chordal plan of the wind turbine blade. Fig. 5d is a perspective view of a part of the wind turbine blade supporting the embodiment of Fig. 5b. The wind turbine blade part 52 comprises a metal mesh layer 80 and a plurality of fibre-reinforced layers 60 including the first fibre-reinforced layer 60' forming a load-carrying structure 50. The fibre-reinforced layer(s) 60 comprises a plurality of first electrically conductive fibres 62, such as carbon fibres or carbon fibre tows. The metal mesh layer 80 comprises a plurality of apertures 82 and comprises a conductive material, such as copper.

A plurality of transverse connectors of an electrically conductive fibre 70 is arranged so as to extend transversely through a thickness of the stacked fibre layers 60 of the load-carrying structure 50. The electrically conductive fibre 70 is configured to dissipate energy into the plurality of said stacked fibre-reinforced layers 60. The metal mesh layer 80 may also be connected to a down-conductor 92 in some other manner. When the metal mesh layer 50 and hence the conductive fibres 62 of the fibre-reinforced layers 60 are connected to the down-conductor 92, the fibres 62 of the fibre-reinforced layers 60, the metal mesh layer 80 and the down-conductor 92 have the same potential, thereby at least reducing the risk of a flashover from a lightning current in the down-conductor 92 transferring to the fibres 62 of the load-carrying structure 50. The lightning receptors 90 are preferably arranged next to the load-carrying structure 50 so as not to compromise the strength thereof. The number and location of the lightning receptors 90 are selected to be in accordance with the dimensions of the blade 10. The metal mesh layers 50 may extend across the entire main laminate and only a single down-conductor 92 may be sufficient to conduct the current to the ground.

The plurality of second electrically conductive fibres 70 provides a better electrical connection between the first fibre-reinforced layer 60' and metal mesh layer 80 by providing a plurality of connections transversely. The wind turbine blade part 52 may comprise additional layers than illustrated in Figs. 5a-5c, such as illustrated in Fig. 6. Fig. 5a-5c illustrate different ways of electrically connecting at least the first fibre-reinforced layer 60' with the metal mesh layer 80.

In Fig. 5a, the plurality of second electrically conductive fibres 70 is provided via a chopped strand mat 72. The chopped strand mat 72 comprises a plurality of chopped electrically conductive fibres 70 extending out of the plane of the chopped strand mat 72. The chopped fibres 70 extend into the metal mesh layer 80 and through the apertures 82, thereby electrically connecting the metal mesh layer 80 with the first fibre-reinforced layer 60' of which the chopped strand mat 72 is in contact with. The chopped strand mat 72 and the first fibre-reinforced layer 60' preferably contact each other, preferably along the entire surface of at least one of the chopped strand mats 72 or the first fibre-reinforced layer 60'.

In Fig. 5b, the plurality of second electrically conductive fibres 70 is provided as stitches 74. The stiches 74 are provided such that the metal mesh layer and the first fibre-reinforced layer 60' are stitched together. In the figure, a single thread of the second electrically conductive fibre 70 is illustrated. However, there may be more electrically conductive fibres 70 running in the same direction as the one illustrated or running in another direction. The stitches 74 are provided through the metal mesh layer 80 by being provided through the apertures 82 before being provided though the first fibre-reinforced layer 60'. The stitches 74 are illustrated as going through the first fibre-reinforced layer 60'. However, the stitches 74 may preferably go through a plurality of the fibre-reinforced layers 60. The stitches 74 in the figure are illustrated as running stitches, but other suitable stitches may be used in addition or as an alternative. As illustrated in Fig. 5d., the stitches are preferably provided substantially along at least some of the edges 84 of the metal mesh layer 80.

In the embodiments shown in Figs. 5b and 5c, the two layers 80, 60' are illustrated spaced apart only for illustrative purposes. However, the two layers 80, 60' contact each other, preferably along the entire surface of at least one of the layers 80, 60'.

In the embodiment shown in Fig. 5c, the plurality of second electrically conductive fibres 70 is provided as punched fibres 76, such as needle-punched fibres. The punched fibres 76 are provided through the apertures 82 of the metal mesh layer 80 and contacting the first fibre and the first fibre-reinforced layer 60'. The punched fibres 76 may be punched such that they contact the first electrically conductive fibres 62 of the first fibre-reinforced layer 60'. As such, the punched fibres 76 may be punched into the first fibre-reinforced layer 60' (as illustrated) or punched such that they contact the first fibre-reinforced layer 60'.

Fig. 6 is a diagram of a wind turbine blade part, such as a wind turbine blade part comprising a main laminate or a spar cap, such as the wind turbine blade part 52 of Figs. 5a-5c. The figure illustrates the different layers that the wind turbine blade may comprise. Although the figure illustrates a specific combination of layers, the wind turbine blade part may comprise fewer layers than illustrated or more layers than illustrated.

The wind turbine blade part 52 comprises a metal mesh layer 80 and a load-carrying structure 50 comprising a plurality of fibre-reinforced layers 60. The plurality of fibre-reinforced layers 60 may comprise a first fibre-reinforced layer 60', a second fibre-reinforced layer 60" and a third fibre-reinforced layer 60‴, wherein each of the plurality of fibre-reinforced layers 60 comprises a plurality of first electrically conductive fibres 62. The metal mesh layer 80 and at least a first fibre-reinforced layer 60' are connected mechanically and/or electrically with a plurality of second electrically conductive fibres 70. The plurality of second electrically conductive fibres 70 are illustrated as provided as a chopped strand mat 72. However, the plurality of second electrically conductive fibres 70 may be provided as otherwise illustrated in Figs. 5a-5c. A first and a second chopped strand mat 72 may be provided on each side of the metal mesh layer 80 as illustrated in Fig. 6, or one chopped strand mat 72 may be provided as illustrated in Fig. 5a.

The first fibre-reinforced layer 60' may be a biax or triax layer comprising biaxial or triaxial fibres, such as carbon fibre tows. The second fibre-reinforced layer 60" may comprise unidirectional fibres, such as unidirectional carbon fibres or carbon fibre tows. The wind turbine blade part 52 may comprise a plurality of unidirectional fibre layers, i.e., a plurality of second fibre-reinforced layers 60". The wind turbine blade part 52 may comprise a third fibre-reinforced layer 60‴ comprising biaxial or triaxial fibres. The wind turbine blade part 52 comprises a blade shell part 24, 26 of a fibre-reinforced polymer material. The third fibre-reinforced layer 60‴ may be arranged between the second fibre-reinforced layer 60‴ or plurality of second fibre-reinforced layers 60‴ and the blade shell part 24, 26.

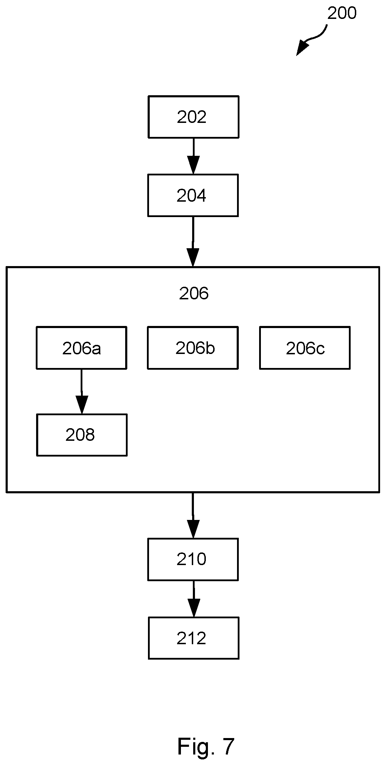

Fig. 7 is a diagram illustrating an exemplary method 200 for manufacturing a wind turbine blade part, such as the wind turbine blade part of Figs. 4-5.

The method 200 comprises providing 202 a first fibre-reinforced layer, e.g., comprising carbon fibres, and providing 204 a metal mesh layer, e.g., comprising copper. The method 200 comprises providing 206 a plurality of second electrically conductive fibres, wherein the plurality of second electrically conductive fibres may be provided via a chopped strand mat 206a, as stitches 206b or as punched fibres 206c. The method 200 further comprises applying 208 vacuum to the first fibre-reinforced layer, the metal mesh layer and the chopped strand mat, at least in the case where the plurality of second electrically conductive fibres are provided via a chopped strand mat. The vacuum will facilitate that chopped fibres of the chopped strand mat will be oriented at least partly in the transverse direction and provide the electrical connection.

The method 200 then comprises providing 210 resin to infuse the at least first fibre-reinforced layer, the metal mesh layer, and the plurality of second electrically conductive fibres and curing 212 the resin to form the wind turbine blade part. The first fibre-reinforced layer, the metal mesh layer, and the plurality of second electrically conductive fibres may be arranged in a mould cavity, e.g., formed by a rigid mould part and a vacuum bag, and wherein the resin is supplied to the mould cavity.

### LIST OF REFERENCES

- 2: wind turbine
- 4: tower
- 6: nacelle
- 8: hub
- 10: blade
- 14: blade tip
- 15: tip end
- 16: blade root
- 17: root end
- 18: leading edge
- 20: trailing edge
- 24: first blade shell part (pressure side)
- 26: second blade shell part (suction side)
- 28: bond lines/glue joints
- 30: root region
- 32: transition region
- 34: airfoil region
- 38: chord line
- 40: shoulder
- 42: shear web or spar side
- 44: inner surface
- 50: load-carrying structure
- 52: wind turbine blade part
- 60': first fibre-reinforced layer
- 60": second fibre-reinforced layer
- 60: fibre-reinforced layer(s)
- 62: first electrically conductive fibres
- 64: fibre-reinforced polymer layer
- 70: second electrically conductive fibres
- 72: chopped strand mat
- 74: stitches
- 76: punched fibres
- 80: metal mesh layer
- 82: apertures
- 84: edge(s)
- 90: receptor
- 92: down-conductor
- 94: connection(s)

- 200: method of manufacturing
- 202: providing first fibre-reinforced layer
- 204: providing a metal mesh layer
- 206: providing a plurality of second electrically conductive fibres
- 206a: providing a plurality of second electrically conductive fibres via a chopped strand mat
- 206b: providing a plurality of second electrically conductive fibres as stitches
- 206c: providing a plurality of second electrically conductive fibres as punched fibres
- 208: applying a vacuum
- 210: providing resin
- 212: curing the resin

## Claims

1. A wind turbine blade part (52) for a wind turbine blade, the wind turbine blade part comprising:
- a metal mesh layer (80) comprising a plurality of apertures,
- at least a first fibre-reinforced layer (60') comprising a plurality of first electrically conductive fibres, the wind turbine blade part being **characterized in that** it further comprises
- a plurality of second electrically conductive fibres (70), wherein at least a number of the plurality of second electrically conductive fibres (70) extend transversely through the plurality of apertures of the metal mesh layer (80) so as to electrically connect the at least first fibre-reinforced layer (60') with the metal mesh layer,

2. Wind turbine blade part according to claim 1, wherein the plurality of second electrically conductive fibres is provided as stitches (74) connecting the at least first fibre-reinforced layer and the metal mesh layer.

3. Wind turbine blade part according to claim 1, wherein the plurality of second electrically conductive fibres is provided via a first chopped strand mat (72), wherein the first chopped strand mat is provided between the at least first fibre-reinforced layer and the metal mesh layer.

4. Wind turbine blade part according to any of the preceding claims, wherein each of the plurality of second electrically conductive fibres comprises carbon fibres, preferably carbon fibre tows.

5. Wind turbine blade part according to any of the preceding claims, wherein the metal mesh layer is electrically connected to a down-conductor or a lightning receptor of a wind turbine blade.

6. Wind turbine blade part according to any of the preceding claims wherein the at least first fibre-reinforced layer comprises unidirectional fibres.

7. Wind turbine blade part according to any of the preceding claims wherein the at least first fibre-reinforced layer comprises biaxial and/or triaxial fibres.

8. Wind turbine blade part according to any of the preceding claims wherein the at least first fibre-reinforced layer comprises carbon fibres, preferably carbon fibre tows.

9. Wind turbine blade part according to any of the preceding claims wherein the wind turbine blade part forms at least a part of the main laminate or spar cap of a wind turbine blade.

10. A method of manufacturing a wind turbine blade part (52) for a wind turbine blade, wherein the method comprises:
- providing at least a first fibre-reinforced layer (60') comprising a plurality of first electrically conductive fibres,
- providing a metal mesh layer (80) comprising a plurality of apertures,
- providing a plurality of second electrically conductive fibres (70), such that at least a number of the second electrically conductive fibres extend transversely through the plurality of apertures of the metal mesh layer so as to electrically connect the at least first fibre-reinforced layer with the metal mesh layer,
- providing resin to infuse the at least first fibre-reinforced layer, the metal mesh layer, and the plurality of second electrically conductive fibres, and
- curing the resin to form the wind turbine blade part.

11. Method according to claim 10, wherein the at least first fibre-reinforced layer, the metal mesh layer, and the plurality of second electrically conductive fibres are arranged in a mould cavity, e.g., formed by a rigid mould part and a vacuum bag, and wherein the resin is supplied into the mould cavity.

12. Method according to any of the claims 10-11, wherein providing the plurality of second electrically conductive fibres comprises providing the plurality of second electrically conductive fibres via a chopped strand mat, and wherein the method comprises arranging the chopped strand mat between the at least first fibre-reinforced layer and the metal mesh layer.

13. Method according to any of the claims 10-12, wherein the number of second electrically conductive fibres that extend transversely through the plurality of apertures is provided by applying a vacuum to the mould cavity.

14. Method according to any of the claims 10-11, wherein providing the plurality of second electrically conductive fibres comprises providing the plurality of second electrically conductive fibres as stitches combining the metal mesh layer and the at least first fibre-reinforced layer.

15. Method according to any of the claims 10-11, wherein providing the plurality of second electrically conductive fibres comprises providing the plurality of second electrically conductive fibres as punched fibres, e.g. needle-punched fibres combining the metal mesh layer and the at least first fibre-reinforced layer.

## Patentansprüche

1. Windkraftanlagenblattteil (52) für ein Windkraftanlagenblatt, wobei das Windkraftanlagenblattteil Folgendes umfasst:
- eine Metallgitterschicht (80), umfassend eine Vielzahl von Öffnungen,
- mindestens eine erste faserverstärkte Schicht (60'), umfassend eine Vielzahl von ersten elektrisch leitfähigen Fasern, wobei das Windkraftanlagenblattteil **dadurch gekennzeichnet ist, dass** es weiter umfasst
- eine Vielzahl von zweiten elektrisch leitfähigen Fasern (70),
wobei sich mindestens eine Anzahl der Vielzahl von zweiten elektrisch leitfähigen Fasern (70) quer durch die Vielzahl von Öffnungen der Metallgitterschicht (80) erstreckt, um die mindestens erste faserverstärkte Schicht (60') elektrisch mit der Metallgitterschicht zu verbinden.

2. Windkraftanlagenblattteil nach Anspruch 1, wobei die Vielzahl von zweiten elektrisch leitfähigen Fasern als Stiche (74) bereitgestellt ist, die die mindestens erste faserverstärkte Schicht und die Metallgitterschicht verbinden.

3. Windkraftanlagenblattteil nach Anspruch 1, wobei die Vielzahl von zweiten elektrisch leitfähigen Fasern über eine erste Schnittfasermatte (72) bereitgestellt ist,
wobei die erste Schnittfasermatte zwischen der mindestens ersten faserverstärkten Schicht und der Metallgitterschicht bereitgestellt ist.

4. Windkraftanlagenblattteil nach einem der vorstehenden Ansprüche, wobei jede der Vielzahl von zweiten elektrisch leitfähigen Fasern Kohlenstofffasern, vorzugsweise Kohlenstofffaserkabel, umfasst.

5. Windkraftanlagenblattteil nach einem der vorstehenden Ansprüche, wobei die Metallgitterschicht elektrisch mit einem Ableiter oder einem Blitzableiter eines Windkraftanlagenblatts verbunden ist.

6. Windkraftanlagenblattteil nach einem der vorstehenden Ansprüche, wobei die mindestens erste faserverstärkte Schicht unidirektionale Fasern umfasst.

7. Windkraftanlagenblattteil nach einem der vorstehenden Ansprüche, wobei die mindestens erste faserverstärkte Schicht biaxiale und/oder triaxiale Fasern umfasst.

8. Windkraftanlagenblattteil nach einem der vorstehenden Ansprüche, wobei die mindestens erste faserverstärkte Schicht Kohlenstofffasern, vorzugsweise Kohlenstofffaserkabel, umfasst.

9. Windkraftanlagenblattteil nach einem der vorstehenden Ansprüche, wobei das Windkraftanlagenblattteil mindestens einen Teil des Hauptlaminats oder des Gurts eines Windkraftanlagenblatts bildet.

10. Verfahren zur Herstellung eines Windkraftanlagenblattteils (52) für ein Windkraftanlagenblatt, wobei das Verfahren umfasst:
- Bereitstellen mindestens einer ersten faserverstärkten Schicht (60'), umfassend eine Vielzahl von ersten elektrisch leitfähigen Fasern,
- Bereitstellen einer Metallgitterschicht (80), umfassend eine Vielzahl von Öffnungen,
- Bereitstellen einer Vielzahl von zweiten elektrisch leitfähigen Fasern (70), sodass sich mindestens eine Anzahl der zweiten elektrisch leitfähigen Fasern quer durch die Vielzahl von Öffnungen der Metallgitterschicht erstreckt, um die mindestens erste faserverstärkte Schicht elektrisch mit der Metallgitterschicht zu verbinden,
- Bereitstellen von Harz zum Durchdringen der mindestens ersten faserverstärkten Schicht, der Metallgitterschicht und der Vielzahl von zweiten elektrisch leitfähigen Fasern, und
- Aushärten des Harzes, um das Windkraftanlagenblattteil zu bilden.

11. Verfahren nach Anspruch 10, wobei die mindestens erste faserverstärkte Schicht, die Metallgitterschicht und die Vielzahl von zweiten elektrisch leitfähigen Fasern in einem Formhohlraum angeordnet sind, der z. B. durch einen starren Formteil und einen Vakuumbeutel gebildet wird, und wobei das Harz in den Formhohlraum zugeführt wird.

12. Verfahren nach einem der Ansprüche 10-11, wobei das Bereitstellen der Vielzahl von zweiten elektrisch leitfähigen Fasern ein Bereitstellen der Vielzahl von zweiten elektrisch leitfähigen Fasern über eine Schnittfasermatte umfasst, und wobei das Verfahren ein Anordnen der Schnittfasermatte zwischen der mindestens ersten faserverstärkten Schicht und der Metallgitterschicht umfasst.

13. Verfahren nach einem der Ansprüche 10-12, wobei die Anzahl von zweiten elektrisch leitfähigen Fasern, die sich quer durch die Vielzahl von Öffnungen erstrecken, durch Aufbringen eines Vakuums auf den Formhohlraum bereitgestellt wird.

14. Verfahren nach einem der Ansprüche 10-11, wobei das Bereitstellen der Vielzahl von zweiten elektrisch leitfähigen Fasern ein Bereitstellen der Vielzahl von zweiten elektrisch leitfähigen Fasern als Stiche umfasst, die die Metallgitterschicht und die mindestens erste faserverstärkte Schicht kombinieren.

15. Verfahren nach einem der Ansprüche 10-11, wobei das Bereitstellen der Vielzahl von zweiten elektrisch leitfähigen Fasern ein Bereitstellen der Vielzahl von zweiten elektrisch leitfähigen Fasern als gestanzte Fasern, z. B. als nadelgestanzte Fasern, die die Metallgitterschicht und die mindestens erste faserverstärkte Schicht kombinieren, umfasst.

## Revendications

1. Partie (52) de pale d'éolienne pour une pale d'éolienne, la partie de pale d'éolienne comprenant :
- une couche (80) de treillis métallique comprenant une pluralité d'ouvertures,
- au moins une première couche (60') renforcée de fibres comprenant une pluralité de premières fibres électriquement conductrices, la partie de pale d'éolienne étant **caractérisée en ce qu'**elle comprend en outre
- une pluralité de deuxièmes fibres (70) électriquement conductrices,
dans laquelle au moins un nombre de la pluralité de deuxièmes fibres (70) électriquement conductrices s'étendent transversalement à travers la pluralité d'ouvertures de la couche (80) de treillis métallique de manière à connecter électriquement la au moins première couche (60') renforcée de fibres à la couche de treillis métallique.

2. Partie de pale d'éolienne selon la revendication 1, dans laquelle la pluralité de deuxièmes fibres électriquement conductrices sont fournies en tant que mailles (74) connectant la au moins première couche renforcée de fibres et la couche de treillis métallique.

3. Partie de pale d'éolienne selon la revendication 1, dans laquelle la pluralité de deuxièmes fibres électriquement conductrices sont fournies par l'intermédiaire d'un premier mat (72) à fils coupés,
dans laquelle le premier mat à fils coupés est fourni entre la au moins première couche renforcée de fibres et la couche de treillis métallique.

4. Partie de pale d'éolienne selon l'une quelconque des revendications précédentes, dans laquelle chacune de la pluralité de deuxièmes fibres électriquement conductrices comprend des fibres de carbone, de préférence des câbles de fibres de carbone.

5. Partie de pale d'éolienne selon l'une quelconque des revendications précédentes, dans laquelle la couche de treillis métallique est électriquement connectée à un conducteur de descente ou à un récepteur de foudre d'une pale d'éolienne.

6. Partie de pale d'éolienne selon l'une quelconque des revendications précédentes, dans laquelle la au moins première couche renforcée de fibres comprend des fibres unidirectionnelles.

7. Partie de pale d'éolienne selon l'une quelconque des revendications précédentes, dans laquelle la au moins première couche renforcée de fibres comprend des fibres biaxiales et/ou triaxiales.

8. Partie de pale d'éolienne selon l'une quelconque des revendications précédentes, dans laquelle la au moins première couche renforcée de fibres comprend des fibres de carbone, de préférence des câbles de fibres de carbone.

9. Partie de pale d'éolienne selon l'une quelconque des revendications précédentes, dans laquelle la partie de pale d'éolienne forme au moins une partie du stratifié principal ou de la semelle de longeron d'une pale d'éolienne.

10. Procédé de fabrication d'une partie (52) de pale d'éolienne pour une pale d'éolienne, dans lequel le procédé comprend :
- la fourniture d'au moins une première couche (60') renforcée de fibres comprenant une pluralité de premières fibres électriquement conductrices,
- la fourniture d'une couche (80) de treillis métallique comprenant une pluralité d'ouvertures,
- la fourniture d'une pluralité de deuxièmes fibres (70) électriquement conductrices, de sorte qu'au moins un nombre des deuxièmes fibres électriquement conductrices s'étendent transversalement à travers la pluralité d'ouvertures de la couche de treillis métallique de manière à connecter électriquement la au moins première couche renforcée de fibres à la couche de treillis métallique,
- la fourniture d'une résine pour infuser la au moins première couche renforcée de fibres, la couche de treillis métallique, et la pluralité de deuxièmes fibres électriquement conductrices, et
- le durcissement de la résine pour former la partie de pale d'éolienne.

11. Procédé selon la revendication 10, dans lequel la au moins première couche renforcée de fibres, la couche de treillis métallique, et la pluralité de deuxièmes fibres électriquement conductrices sont agencées dans une cavité de moule, par exemple, formée par une partie de moule rigide et un sac à vide, et dans lequel la résine est amenée dans la cavité de moule.

12. Procédé selon l'une quelconque des revendications 10 à 11, dans lequel la fourniture de la pluralité de deuxièmes fibres électriquement conductrices comprend la fourniture de la pluralité de deuxièmes fibres électriquement conductrices par l'intermédiaire d'un mat à fils coupés, et dans lequel le procédé comprend l'agencement du mat à fils coupés entre la au moins première couche renforcée de fibres et la couche de treillis métallique.

13. Procédé selon l'une quelconque des revendications 10 à 12, dans lequel le nombre de deuxièmes fibres électriquement conductrices qui s'étendent transversalement à travers la pluralité d'ouvertures sont fournies en appliquant un vide à la cavité de moule.

14. Procédé selon l'une quelconque des revendications 10 à 11, dans lequel la fourniture de la pluralité de deuxièmes fibres électriquement conductrices comprend la fourniture de la pluralité de deuxièmes fibres électriquement conductrices en tant que mailles combinant la couche de treillis métallique et la au moins première couche renforcée de fibres.

15. Procédé selon l'une quelconque des revendications 10 à 11, dans lequel la fourniture de la pluralité de deuxièmes fibres électriquement conductrices comprend la fourniture de la pluralité de deuxièmes fibres électriquement conductrices en tant que fibres poinçonnées, par exemple des fibres aiguilletées combinant la couche de treillis métallique et la au moins première couche renforcée de fibres.
